# EUROPEAN PATENT APPLICATION

(11) **EP 1 168 209 A1**
(43) Date of publication of application: **02.01.2002**
(21) Application number: 00113791.8
(22) Date of filing: 29.06.2000
(51) Int. Cl.: G06F 17/60

(54) **Fortune-telling oriented network marketing system and method**

(71) Applicant: PCYI Network Corporation, Taipei (TW)
(72) Inventor: Chen, Chin-min, Taipei (TW)
(74) Representative: TER MEER STEINMEISTER & PARTNER GbR

(57) **Abstract**

A fortune-telling oriented marketing system, which comprises a memory module (11), a reception module (12), a fortune analysis module (13) and a transmission module (14). The memory module (11) stores a basic database. The reception module (12) receives the basic data of a recipient entered by a user (51) and stores them into the basic database (111). The fortune analysis module (13) performs a fortune analysis on the recipient according to the basic data to obtain a fortune analysis result. The transmission module (14) transmits the fortune analysis result to the recipient (52) so as to increase the recipient's desire to connect to the fortune-telling oriented marketing system. The invention also provides a fortune-telling oriented network marketing method.

## Description

### Field of Invention

The invention relates to a network system and, in particular, to a fortune-telling oriented network marketing system and its corresponding method.

### Related Art

Along with the rapid development in network technology, using the network to facilitate commercial activities has become a brand new model of commerce. However, due to severe competition, making a company known to people and attracting customers to consume has become an important subject for merchants performing commercial activities over the network. In the prior art, it is customary to post advertisements using many types of media or to send out a huge amount of advertisement letters to introduce the orientation of the company and the product contents. This method is not only expensive but also cannot effectively introduce the products to customers that may be interested in them. Some customers may not like to receive advertisement letters, and therefore this kind of behavior could have negative effects.

Among currently improved marketing methods, a new method is to encourage members to recommend new members in order to increase the number of users. For example, if a company continuously holds lotteries on its website and when a member wins the lottery the member who recommended him will also obtain some bonus. Therefore, the members will be more willing to introduce their friends for membership in the website.

Although this type of improved marketing can attract a large number of users, the actual reason for the users to acquire membership is not for the products provided by the company, but the activities that have no direct relation to the products. Thus, benefits will not grow at the same speed as the number of members.

Another improved marketing method is to provide some simple and free activities for members to recommend to their friends in order to attract more users. For example, the website may provide free electronic birthday cards for members to send to their friends. Another example is a network magazine provider can allow several feature articles for readers to freely send to others, achieving the goal of advertising its magazines.

However, these improved marketing methods have several defects. First, if the content of the electronic cards (E-cards) have no relation to the products, then the sales will not increase with the number of the members. Second, these methods will not directly entice the member's friends into acquiring membership and therefore cannot obtain the basic data of potential users leaving only the data of the existing members for analyzing and providing the products or services that they need. Third, even if the basic data of potential users other than existing members are obtained, the data may not be real due to fear that the network connection is not secure when the members send out E-cards and thus the obtained data are mostly useless.

Accordingly, how to provide a marketing method that offers more effective advertising, creates sales growth along with the growth in the number of members, and can obtain the basic data of potential users with higher credibility for analyzing the needs of potential consumers is an important subject in current network industry.

### SUMMARY OF THE INVENTION

To solve the above-raised issue, it is an object of the invention to provide a fortune-telling oriented network marketing method and its corresponding system, which can increase the user's will to connect to the fortune-telling oriented network marketing system so that the sales growth of the company grows with the number of members.

It is another object of the invention to provide a fortune-telling oriented network marketing method and its corresponding system, which can obtain basic data of users with high credibility so as to analyze the real needs of customers.

To achieve the above objects, the fortune-telling oriented network marketing system of the invention comprises a memory module, a reception module, a fortune analysis module and a transmission module. The memory module stores a basic database. The reception module receives the basic data of a recipient entered by a user and stores the data into the basic database. The fortune analysis module performs a fortune analysis on the recipient according to the basic data to obtain a fortune analysis result. The transmission module transmits the fortune analysis result to the recipient so as to increase the recipient's desire to connect to the fortune-telling oriented marketing system. The invention also provides a fortune-telling oriented network marketing method.

Another embodiment of the invention is a fortune-telling oriented network marketing method, which comprises a reception step, a data storage step, a fortune analysis step, a transmission step and a market analysis step. The reception step receives the basic data of a recipient entered by a user. The data storage step stores the basic data of the recipient. The fortune analysis step performs a fortune analysis according to the basic data of the recipient. The transmission step sends the fortune analysis result to the recipient. The market analysis step finds the needs of the user according to the basic data of the user, which are then taken as the reference for determining the market trend.

### BRIEF DESCRIPTION OF THE DRAWINGS

Other features, advantages and embodiments of the invention will be clear from reading the description hereinafter, given by way of non-limitative examples, with reference to the accompanying drawings in which:
FIG. 1 is a block diagram showing the structure of a fortune-telling oriented network marketing system according to a preferred embodiment of the invention; and
FIG. 2 is a flow chart showing a fortune-telling oriented network marketing method according to a preferred embodiment of the invention.

In the various drawings, the same references relate to the same elements.

### DETAILED DESCRIPTION OF THE INVENTION

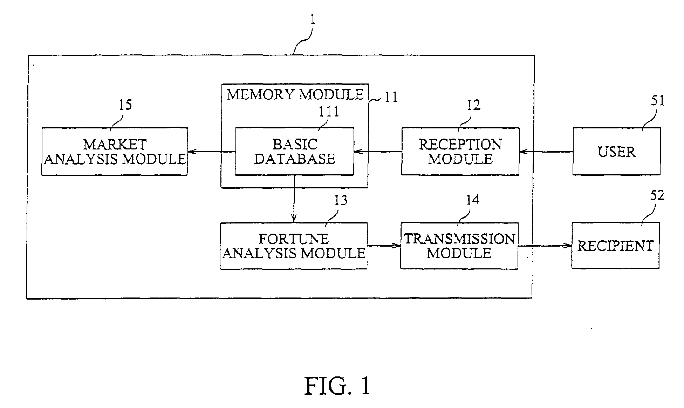

As shown in FIG. 1, a preferred embodiment of the fortune-telling oriented network marketing system 1 of the invention comprises a memory module 11, a reception module 12, a fortune analysis module 13, a transmission module 14 and a market analysis module 15; wherein the memory module 11 stores a basic database 111 recording the basic data of all users.

When a user 51 logs onto the fortune-telling oriented network marketing system 1, he can enter the basic data of a recipient 52. After the reception module 12 receives the basic data of the recipient 52 entered by the user 51, the basic data are then stored in the basic database 111 of the memory module 11. For example, the user 51 can enter the name, birthday and blood type of his friend into the fortune-telling oriented network marketing system 1. When the reception module 12 obtains the basic data, the basic data of the user's friend, the recipient 52, are then stored into the basic database 111. The memory module 11 can include any device with a memory function, such as a hard disk drive, flash memory or dynamically random access memory (DRAM).

When entering the basic data of the recipient 52, if there are no previous data about the recipient 52 in the basic database 111, then the user 51 has to enter at least one basic datum for the recipient. If, however, the basic data of the recipient are previously entered, the user 51 can choose to input new basic data, to modify the existing basic data or to simply select the basic data that he wants to use from the existing basic data. Therefore, the user 51 can more conveniently use the fortune-telling oriented network marketing system 1 of the invention. For instance, if the user 51 has established the basic data of the recipient 52 in an address book, when the user 51 wants to enter the basic data of the recipient 52, he can simply select the data from the address book. This makes the service more convenient and the user 51 is more willing to use.

Nevertheless, it should be noted that if only DRAM is used as the memory module 11, after the user 51 logs out of the fortune-telling oriented network marketing system 1, it might not continuously store the entered basic data. The next time the user 51 logs onto the network, he has to enter the basic data of the recipient 52 again and is not able to select the previously entered basic data, which is very inconvenient. Therefore, even if using only DRAM as the memory module 11, it is still within the scope of the invention and the inventor recommends adding a memory device that can store data for a long period of time, such as a hard disk drive, in the memory module 11.

The fortune analysis module 13 analyzes the fortune of the recipient 52 according to the basic data. For example, the name of the blood type of the recipient 52 can be used to analyze the advantages and disadvantages of his personality, or his birthday can be used to predict the his fortune for the week using a horoscope. It should be understood that the fortune analysis type is determined by the basic data entered by the user 51. For instance, if the user 51 does not enter the birthday of the recipient 52, then it is impossible to perform a horoscope for the recipient 52. Therefore, the system can remind the user 51 what types of fortune analyses can be performed while he enters the basic data.

The transmission module 14 transmits the fortune analysis result obtained in the fortune analysis for the recipient 52 by the fortune analysis module 13 according to the basic data of the recipient 52 in a predetermined form. For example, if it is close to the recipient's birthday when the user 51 transmits the fortune analysis result to the recipient 52, then the fortune analysis result can be sent in the form of an electronic card (E-card) to the recipient 52. This can greatly impress the recipient 52, increasing the effectiveness of the advertisement.

The market analysis module 15 determines the needs of the recipient 52 according to the contents of the basic database 111 in the memory module 11. For instance, if a company provides the service of producing an E-card with the fortune analysis result and sending it to a friend on its website, then it could be found that a male user sends more E-cards to female friends than male friends. Then the service provider can design more romantic E-cards for these users.

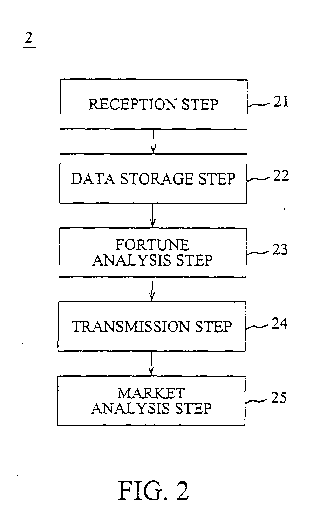

Referring to FIG. 2, a preferred embodiment of the fortune-telling oriented network marketing method 2 according to the invention includes a reception step 21, a data storage step 22, a fortune analysis step 23, a transmission step 24 and a market analysis step 25. The reception step receives the basic data of a recipient 52 entered by a user 51, such as the name and birthday of recipient 52. The data storage step 22 stores the basic data of the recipient 52. The fortune analysis step 23 performs a fortune analysis on recipient 52 according to his basic data. The fortune analysis result is then transmitted to the recipient 52 in the transmission step 24. The market analysis step 25 analyzes the needs of the recipient 52 according to his basic data for the reference of the market trend.

Since the basic data of the recipient are stored in the memory module, the system provider can find out the needs of the users so as to improve the products or services. For example, if a company provides an E-card service with the fortune analysis result and sends it to the friend of user 51 on its website, then it could be found that a male user sends more E-cards to female friends than male friends. Then the service provider can design more romantic E-cards for these users.

According to the fortune-telling oriented network marketing method and its corresponding system, the transmission of the fortune analysis result to a recipient is not a usual advertisement, and the fortune analysis is done particularly for the person so that each person will receive a personalized fortune analysis. Therefore, they are very attractive to the recipients. Thus, the recipients will not have a bad impression of the service provider. This can greatly increase the recipient's interest in connecting to the fortune-telling oriented network marketing system, greatly increasing the effects of the advertising.

According to the fortune-telling oriented network marketing method and its corresponding system, the obtained basic data are used for fortune analyses and therefore are trustworthier. The service provider can use these more credible basic data to perform more accurate market analysis so as to determine the needs of potential customers and to improve the contents of its products and services. For instance, if the recipients are mostly adolescents, then these adolescents can be considered the major potential consumers and the services are changed accordingly. If most of the users send wealth-related fortune analyses to their friends, then the service provider knows that the users and recipients are more interested in financial information. Thus, the service provider can provide more services about investment, money management and financial news.

The fortune-telling oriented network marketing method and its corresponding system can combine with network service providers of different types and contents. For example, they can combine with a website whose theme is to make friends to provide fortune analysis services. When the basic data of the recipient entered by the user is received by the friend-making website, the basic data are transmitted to the fortune-telling oriented network marketing system to perform a fortune analysis. After the analysis finishes, the results are transmitted to the recipient. Therefore, the friend-making website does not need to have a fortune-telling oriented network marketing system itself but can still provide the service of fortune analyses. The fortune-telling oriented network marketing system can provide the friend-making website provider the orientation of potential customers according to the personal data for the service provider to improve or increase its services. Thus, this does not only attract more recipients to connect to the friend-making website but can provide the provider with the exact interests and needs of the users and recipients.

While the invention has been shown and described with reference to the foregoing preferred embodiments, it is to be understood by those skilled in the art that other changes in form and detail may be made therein without departing from the spirit and scope of the invention as defined in the appended claims.

## Claims

1. A fortune-telling oriented network marketing system, which comprises:
a memory module for storing a basic database;
a reception module for receiving basic data of a recipient entered by a user and storing the basic data into the basic database;
a fortune analysis module for performing a fortune analysis on the recipient according to the basic data and obtaining a fortune analysis result; and
a transmission module for transmitting the fortune analysis result to the recipient so as to increase the recipient's desire to connect to the fortune-telling oriented network marketing system.

2. The fortune-telling oriented network marketing system of claim 1, further comprising a market analysis module for determining the needs of the recipient according to the contents in the basic database.

3. The fortune-telling oriented network marketing system of claim 1, wherein the memory module comprises a hard disk drive.

4. The fortune-telling oriented network marketing system of claim 1, wherein the memory module comprises flash memory.

5. The fortune-telling oriented network marketing system of claim 1, wherein the memory module comprises dynamically random access memory (DRAM).

6. The fortune-telling oriented network marketing system of claim 1, wherein the fortune analysis result is sent to the recipient in the form of an electronic card.

7. A fortune-telling oriented network marketing method, which comprises:
a reception step for receiving basic data of a recipient entered by a user;
a data storage step for storing the basic data;
a fortune analysis step for performing a fortune analysis on the recipient according to the basic data and obtaining a fortune analysis result; and
a transmission step for transmitting the fortune analysis result to the recipient so as to increase the recipient's desire to connect to the fortune-telling oriented network marketing system.

8. The fortune-telling oriented network marketing method of claim 7 further comprising a market analysis step for determining the needs of the recipient according to the contents in the basic database.

9. The fortune-telling oriented network marketing method of claim 7, wherein the fortune analysis result is sent to the recipient in the form of an electronic card,
